# EUROPÄISCHE PATENTSCHRIFT

(11) **EP 3 763 198 B1**
(45) Veröffentlichungstag und Bekanntmachung des Hinweises auf die Patenterteilung: **04.01.2023**
(21) Anmeldenummer: 20162270.1
(22) Anmeldetag: 11.03.2020
(51) Int. Cl.: A01F 12/20

(54) **DRESCHTROMMEL EINER DRESCHVORRICHTUNG FÜR EINEN MÄHDRESCHER**
THRESHING DRUM OF A THRESHING DEVICE FOR A COMBINE
BATTEUR D'UN DISPOSITIF BATTEUR POUR MOISSONNEUSE-BATTEUSE

(30) Priorität: 11.07.2019 DE 102019118759
(43) Veröffentlichungstag der Anmeldung: 13.01.2021
(73) Patentinhaber: CLAAS Selbstfahrende Erntemaschinen GmbH, 33428 Harsewinkel (DE)
(72) Erfinder: Esken, Dirk, 59494 Soest-Meckingsen (DE); Schwersmann, Berthold, 49186 Bad Iburg (DE)
(74) Vertreter: CLAAS Gruppe

(56) Entgegenhaltungen:
- EP-B1- 2 238 824
- US-A- 3 512 533
- US-A- 4 796 645
- US-A- 5 624 314
- US-A1- 2017 280 628

## Beschreibung

Die vorliegende Erfindung betrifft einen Mähdrescher gemäß dem Oberbegriff des Anspruches 1.

Ein Mähdrescher mit einer nach dem Tangentialflussprinzip arbeitenden Dreschvorrichtung sowie einer Abscheidevorrichtung weist eine Dreschvorrichtung auf mit einer Dreschtrommel welche einen in Umfangsrichtung geschlossenen zylindrischen Grundkörper, auf welchem in Umfangsrichtung verteilt mehrere mit Abstand zueinander angeordnete Tragprofile angebracht sind, die sich im Wesentlichen über die Breite des Grundkörpers erstrecken. An den Tragprofilen sind jeweils mit Rippen versehene Schlagleisten lösbar befestigt, wobei die Rippen der jeweiligen Schlagleiste eine Neigung in Bezug auf eine Rotationsrichtung der Dreschtrommel aufweisen. Entsprechend der Neigung der Rippen auf einer Schlagleiste wird von linksgerippt oder rechtsgerippt gesprochen. Die Rippen haben vorrangig die Aufgabe, Korn zu Schlagen und zu Reiben. Aufgrund ihrer jeweiligen Neigung kommt es entsprechend zu einer Ab- oder Umlenkung des Erntegutes.

Ein Mähdrescher der eingangs genannten Art ist aus der EP 2 238 824 B1 bekannt. Die geschlossene Dreschtrommel ist in Umfangsrichtung mit durchgehenden Schlagleisten bestückt, deren Rippen eine Neigung in Bezug auf eine Rotationsrichtung der Dreschtrommel aufweisen. Dabei werden in Umfangsrichtung der Dreschtrommel abwechselnd links- und rechtsgerippte Schlagleisten angeordnet. Ein von der Dreschtrommel bereitgestellter Erntegutstrom, der im Wesentlichen aus Stroh und darin enthaltenen Kornbestandteilen besteht, gelangt zu einer der Dreschvorrichtung nachgeordneten Abscheidevorrichtung. Für eine gleichmäßigere Aufteilung des Erntegutstromes ist zwischen der Dreschtrommel und der Abscheidevorrichtung eine weitere Trommel vorgesehen. Die Trommel ist, je nach Ausführung der Abscheidevorrichtung entweder als Hordenschüttler oder als Axialtrennrotor, als eine Abscheide- bzw. Wendetrommel oder als eine Zuführtrommel ausgebildet. Nachteilig ist dabei, dass das Aufteilen des Erntegutstroms im Bereich der der Dreschtrommel nachgeordneten Trommel mitunter zu Gutflussproblemen führen kann.

Aufgabe der vorliegenden Erfindung ist es, einen Mähdrescher mit einer Dreschtrommel einer Dreschvorrichtung weiterzubilden, welcher die Nachteile des Standes der Technik überwindet oder zumindest minimiert, insbesondere, um eine verbesserte Zuführung des Erntegutes zu der der Dreschtrommel nachgeordneten Abscheidevorrichtung zu erreichen.

Diese wird erfindungsgemäß durch einen Mähdrescher mit den Merkmalen des Anspruches 1 gelöst.

Gemäß dem Anspruch 1 wird ein Mähdrescher vorgeschlagen mit einer nach dem Tangentialflussprinzip arbeitenden Dreschvorrichtung sowie einer Abscheidevorrichtung, wobei die Dreschvorrichtung eine Dreschtrommel umfasst, umfassend einen in Umfangsrichtung geschlossenen zylindrischen Grundkörper, auf welchem in Umfangsrichtung verteilt mehrere mit Abstand zueinander angeordnete Tragprofile angebracht sind, die sich im Wesentlichen über die Breite des Grundkörpers erstrecken, wobei an den Tragprofilen jeweils mit Rippen versehene Schlagleisten lösbar befestigt sind, wobei die Rippen der jeweiligen Schlagleiste eine Neigung zur Rotationsrichtung der Dreschtrommel aufweisen. Um eine gezielte axiale Förderung zu erreichen, ist vorgesehen, dass zumindest zwei mit Rippen ausgeführte Schlagleisten nebeneinander auf dem jeweiligen Tragprofil angeordnet sind, wobei die Rippen von jeweils nebeneinanderliegenden Schlagleisten gegensinnig orientiert sind, und dass jedes Tragprofil mit einer gleichen Kombination und Anordnung von Schlagleisten bestückt ist. Diese Ausgestaltung hat den Effekt, dass das Erntegut von den Rippen der mit der Dreschtrommel rotierenden Schlagleisten im Wesentlichen einheitlich abgelenkt wird. Durch die zumindest zwei nebeneinander angeordneten Schlagleisten mit unterschiedlicher Orientierung der Rippen lässt sich Gutflussproblemen begegnen, die insbesondere an einer der Dreschtrommel nachgeordneten Trommel, wie einer Wendetrommel oder Zuführtrommel, auftreten können. Insbesondere lassen sich Gutflussprobleme vermeiden oder zumindest deutlich reduzieren, die bei niedrigen Drehzahlen der Dreschvorrichtung auftreten und zu einem Gutstau führen können. Die Ausführung als geschlossene Dreschtrommel hat den Vorteil, dass der zylindrischen Grundkörper das gesamte Drehmoment überträgt, so dass eine flexible Bestückung der Dreschtrommel mit Schlagleisten möglich ist, ohne die Festigkeit der Dreschtrommel zu beeinflussen, wie dies bei offen ausgeführten Dreschtrommeln der Fall ist.

Gemäß einer bevorzugten Ausführung können mehr als zwei Schlagleisten auf dem jeweiligen Tragprofil nebeneinander angeordnet sein, wobei die Schlagleisten wechselweise über die Breite des jeweiligen Tragprofils verteilt angeordnet sind, wobei die an den gegenüberliegenden Außenseiten des Tragprofils angeordneten Schlagleisten jeweils Rippen aufweisen, die bezogen auf eine Rotationsrichtung der Dreschtrommel eine Neigung in Richtung auf einen mittleren Bereich der Dreschtrommel aufweisen. Unter dem Begriff Breite der Schlagleisten ist ihre jeweilige Erstreckung in axialer der Dreschtrommel zu verstehen. Bei dieser Ausgestaltung schließen die an den Außenseiten angeordneten Schlagleisten zumindest zwei weitere Schlagleisten zwischen sich ein, welche jeweils mit gegensinnig orientierten Rippen versehen sind. Auf diese Weise bilden sich zumindest zwei Paare von Schlagleisten aus, die Erntegut auf jeweils einen Abschnitt zentriert zusammenführen. Diese Anordnung der Rippen ist besonders dann vorteilhaft, wenn das Erntegut von der Dreschvorrichtung einer nach dem Axialflussprinzip arbeitenden Abscheidevorrichtung zugeführt wird, die zwei parallel zueinander angeordnete Trennrotoren aufweist. Jedem Trennrotor geht jeweils ein separater Einlaufbereich voraus. Durch die paarweise Anordnung der Schlagleisten mit gegensinnig orientieren Rippen erfolgt eine abschnittsweise Zusammenführung des Erntegutes über die Breite der Dreschtrommel gesehen, um das Erntegut auf den jeweiligen Einlaufbereich zu zentrierten. Dabei ist der Begriff Zentrieren so zu verstehen, dass das Erntegut nicht in einem Punkt oder sehr schmalen Bereich zusammenläuft, sondern dass das von der Dreschtrommel geförderte Erntegut eine Orientierung erhält, die auf die beiden Abschnitte respektive die beiden Einlaufbereiche der Abscheidevorrichtung ausgerichtet ist bzw. in diesen zusammenläuft.

In einer weiteren bevorzugten Ausführungsform können die nebeneinander auf einem Tragprofil angeordneten Schlagleisten im Wesentlichen die gleiche Breite aufweisen, wobei die Rippen der jeweiligen Schlagleiste bezogen auf eine Rotationsrichtung der Dreschtrommel jeweils eine Neigung in Richtung auf einen mittleren Bereich der Dreschtrommel aufweisen. Diese Anordnung der Rippen bewirkt, dass es zu einer Zusammenführung des von der Dreschtrommel transportierten Erntegutes auf einen, insbesondere mittleren, Bereich kommt. Diese Anordnung der Rippen ist besonders dann vorteilhaft, wenn das Erntegut von der Dreschvorrichtung einer nach dem Axialflussprinzip arbeitenden Abscheidevorrichtung zugeführt wird, die genau einen Trennrotor aufweist. Die nach dem Axialflussprinzip arbeitende Abscheidevorrichtung weist zumindest einen Einlaufbereich auf, der als eine Art Trichter fungiert und das von der Dreschvorrichtung kommende Erntegut aufnimmt und im Wesentlichen mittig zusammenführt. Dadurch, dass die Rippen der jeweiligen Schlagleiste bezogen auf die Rotationsrichtung der Dreschtrommel eine Neigung in Richtung eines mittleren Bereiches der Dreschtrommel aufweisen, wird das Zusammenführen des Erntegutes bereits vor dem Erreichen des Einlaufbereichs der Abscheidevorrichtung unterstützt. Hierdurch kann ein wiederholter Umlauf von Erntegut in der Dreschvorrichtung, welches von der nach dem Axialflussprinzip arbeitenden Abscheidevorrichtung, die genau einen Trennrotor aufweist, nicht unmittelbar angenommen wird, reduziert werden.

Gemäß einer weiteren Ausführungsform können die nebeneinander auf einem Tragprofil angeordneten Schlagleisten im Wesentlichen die gleiche Breite aufweisen, wobei die Rippen der jeweiligen Schlagleiste bezogen auf eine Rotationsrichtung der Dreschtrommel jeweils eine Neigung in Richtung einer Außenkante der Dreschtrommel aufweisen. Unter der Breite der Schlagleisten ist ihre Erstreckung in axialer der Dreschtrommel zu verstehen. Diese Anordnung ist besonders dann vorteilhaft, wenn das Erntegut, welches von der Dreschvorrichtung einer nachgeordnete Abscheidevorrichtung zugeführt wird, möglichst gleichmäßig über die gesamte Breite der Abscheidevorrichtung zugeführt werden soll. Insbesondere die Verteilung auf und die Zuführung in den äußersten Randbereichen wird auf diese Weise begünstigt. Besonders vorteilhaft kann diese Ausführung bei einer als Hordenschüttler ausgeführten Abscheidevorrichtung zum Einsatz kommen. Die Anwendung dieser Anordnung der Schlagleisten ist jedoch nicht auf Hordenschüttler als Abscheidevorrichtung beschränkt.

Insbesondere können die Schlagleisten als Winkelprofile ausgebildet sein, deren Schenkel unter einem Winkel zwischen 136° und 156° zueinander angeordnet sind. Gegenüber Schlagleisten, die nach der zurückgezogenen DIN 11 701 ausgeführt sind, weisen die Schlagleisten einen flacheren Schlagleistenwinkel auf, wodurch bei der geschlossenen Dreschtrommel die Bruchkornentstehung reduziert wird. Von einer der Dreschtrommel vorgeordneten Vordresch- oder Beschleunigertrommel hochgeworfene Körner prallen dadurch auf eine geneigte Fläche und treffen nicht normal auf diese, wie das bei einem Schlagleistenwinkel gemäß der DIN 11 701 von 126° der Fall ist. Besonders bevorzugt beträgt der Schlagleistenwinkel der als Winkelprofil ausgebildeten Schlagleisten zwischen 140° Und 150°, um das Entstehen von Bruchkorn beim Auftreffen auf die Schlagleisten zu reduzieren.

Insbesondere kann die Abscheidevorrichtung als ein Hordenschüttler ausgebildet sein. Hierbei erfolgt die Anordnung der beiden Schlagleisten auf den jeweiligen Tragprofilen in der Weise, dass eine hin zu den Außenseiten des Tragprofils gerichtete Ablenkung des Gutstromes erfolgt.

Alternativ kann die Abscheidevorrichtung nach dem Axialflussprinzip arbeiten. Durch die Anordnung von mehr als zwei Schlagleisten auf dem jeweiligen Tragprofil nebeneinander, wobei die Schlagleisten wechselweise über die Breite des jeweiligen Tragprofils verteilt angeordnet sind, wobei die an den gegenüberliegenden Außenseiten des Tragprofils angeordneten Schlagleisten jeweils Rippen aufweisen, die bezogen auf eine Rotationsrichtung der Dreschtrommel eine Neigung in Richtung auf einen mittleren Bereich der Dreschtrommel aufweisen kann eine gezielte Zuführung des Erntegutes zu dem jeweiligen Trennrotor der Abscheidevorrichtung erreicht werden.

Hierbei kann die Abscheidevorrichtung zumindest einen Axialtrennrotor umfassen. Dabei erfolgt die Anordnung der beiden Schlagleisten auf den jeweiligen Tragprofilen in der Weise, dass eine zur Mitte der Dreschtrommel gerichtete, im Wesentlichen auf einen Bereich zentrierte, Ablenkung des Gutstromes erfolgt. Das Ablenken des Gutstroms durch die beiden Schlagleisten aufgrund der gegensinnigen Anordnung der Rippen bewirkt zudem, dass der Anteil an Erntegut, welches bei der Zuführung durch die Umlenktrommel von der Abscheidevorrichtung nicht unmittelbar angenommen wird und dadurch in der Dreschvorrichtung erneut umläuft, reduziert wird.

Bevorzugt kann die Abscheidevorrichtung zwei Axialtrennrotoren umfassen. Hierdurch lässt sich ein höherer Durchsatz an Erntegut realisieren.

Die vorliegende Erfindung wird nachstehend anhand eines in den Zeichnungen dargestellten Ausführungsbeispieles näher erläutert.

Es zeigen:
- Fig. 1: eine schematische Teildarstellung eines selbstfahrenden Mähdreschers;
- Fig. 2: eine perspektivische Ansicht einer geschlossenen Dreschtrommel, deren Tragprofile jeweils mit zwei Schlagleisten bestückt sind;
- Fig. 3: eine perspektivische Ansicht der Dreschtrommel mit einer Anordnung der Schlagleisten gemäß einer zweiten Ausführungsform; und
- Fig. 4: eine perspektivische Ansicht der Dreschtrommel, deren Tragprofile jeweils mit vier Schlagleisten gemäß einer Anordnung einer dritten Ausführungsform bestückt sind.

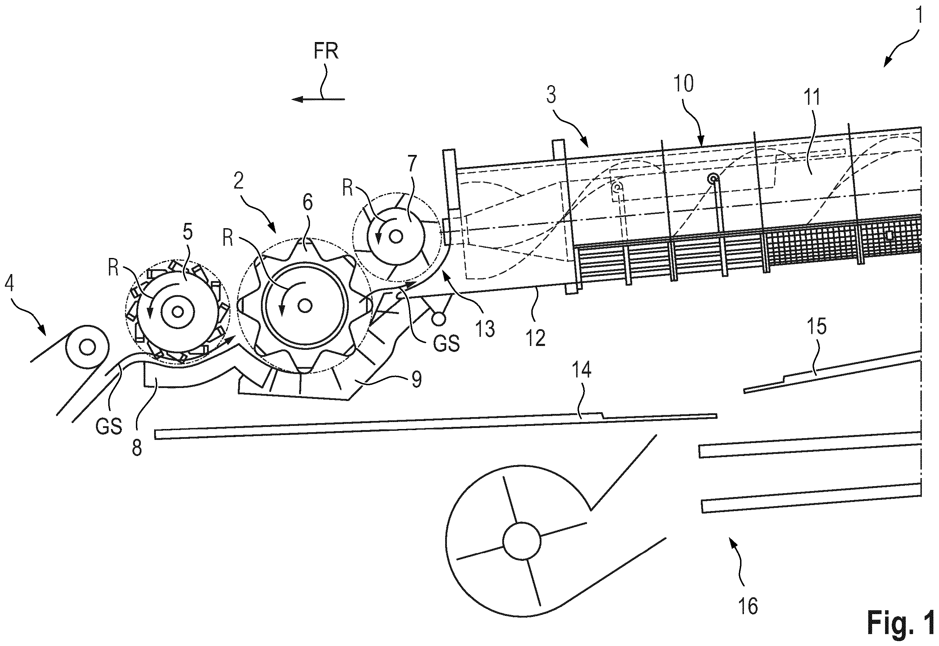

In Fig. 1 ist eine schematische Teildarstellung eines selbstfahrenden Mähdrescher 1 dargestellt, der mit einer nach dem Tangentialflussprinzip arbeitenden Dreschvorrichtung 2 und einer der Dreschvorrichtung 2 nachgeordneten, nach dem Axialflussprinzip arbeitenden Abscheidevorrichtung 3 ausgerüstet ist. Die Abscheidevorrichtung 3 kann auch als ein Hordenschüttler ausgeführt sein. Zu verarbeitendes Erntegut, im Wesentlichen aus Korn und Nichtkornbestandteilen, wie Stroh, Spreu oder dergleichen, bestehend, wird von einem Vorsatzgerät, wie beispielsweise einem Schneidwerk oder einem Maispflücker, aufgenommen. Das Vorsatzgerät führt das Erntegut in Form eines Gutstromes GS einem Schrägförderer 4 zu. Der Schrägförderer 4 übergibt das Erntegut an die Dreschvorrichtung 2, welche das Erntegut mechanisch bearbeitet. Die Dreschvorrichtung 2 weist zumindest drei Trommeln 5 - 7 auf, die jeweils in Rotationsrichtung R rotierend angetrieben sind. Die Dreschvorrichtung 2 umfasst eine Vordresch- oder Beschleunigertrommel 5, die einer Dreschtrommel 6 vorgelagert ist, sowie eine der Dreschtrommel 6 nachgelagerte, als Zuführtrommel ausgeführte Trommel 7. Die Vordreschtrommel 5 ist zum Vordreschen und Beschleunigen des Erntegutes sowie zum Zuführen des Erntegutes an die Dreschtrommel 6 vorgesehen, die Dreschtrommel 6 drischt Kornbestandteile des Ernteguts aus dem Gutstrom GS aus, und die als Zuführtrommel ausgeführte Trommel 7 übergibt das weitgehend ausgedroschene Erntegut der Abscheidevorrichtung 3. Die Abscheidevorrichtung 3 hat die Aufgabe, in dem Gutstrom GS nach dem Dreschvorgang noch enthaltene Kornbestandteile abzuscheiden.

Die Dreschvorrichtung 2 umfasst weiterhin einen Dreschkorb 8, welcher die Vordreschtrommel 5 abschnittsweise umschließt, sowie einen Dreschkorb 9, der die Dreschtrommel 6 abschnittsweise umschließt. Die nach dem Axialflussprinzip arbeitende Abscheidevorrichtung 3 besteht gemäß dem in Fig. 1 dargestellten Ausführungsbeispiel aus zwei parallel in Fahrtrichtung FR des Mähdreschers 1 nebeneinanderliegenden, bereichsweise als Sieb- oder Lochfläche ausgebildeten, Rotorgehäusen 10, in denen jeweils ein rotierend angetriebener Trennrotor 11 angeordnet ist. Die Abscheidevorrichtung 3 kann auch mit nur einem Trennrotor 11 ausgeführt sein. Die Abscheidevorrichtung 3 weist eine ihrer Anzahl von Trennrotoren 11 entsprechende Anzahl von Einlaufbereichen 13 beziehungsweise Annahmebereich auf, die in einem vorderen Gehäuseabschnitt 12 des Rotorgehäuses 10 angeordnet sind.

Von der Dreschvorrichtung 2 aus dem Gutstrom abgeschiedene Kornbestandteile gelangen auf einen Förderboden 14. Von der Abscheidevorrichtung 3 abgeschiedene Kornbestandteile gelangen auf einen Rücklaufboden 15. Vom Förderboden 14 bzw. Rücklaufboden 15 gelangen die Kornbestandteile über eine Fallstufe zur schematisch angedeuteten Reinigungsvorrichtung 16.

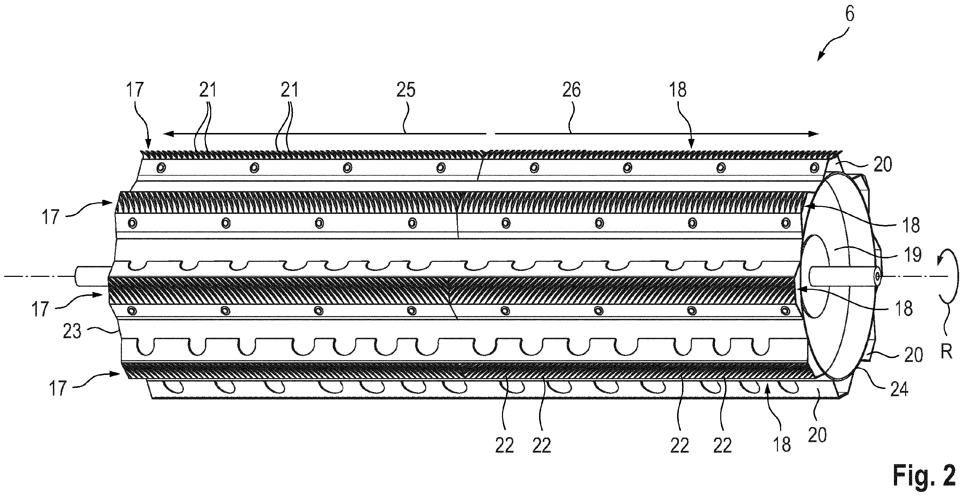

In Fig. 2 ist eine perspektivische Ansicht der geschlossenen Dreschtrommel 6 dargestellt, deren Tragprofile 20 jeweils mit zwei Schlagleisten 17, 18 bestückt sind. Die Dreschtrommel 6 umfasst einen in Umfangsrichtung geschlossenen zylindrischen Grundkörper 19, auf welchem in Umfangsrichtung verteilt mehrere mit Abstand zueinander angeordnete Tragprofile 20 angebracht sind. Die Tragprofile 20 erstrecken sich dabei in axialer Richtung im Wesentlichen über die Breite der Dreschtrommel 6. Auf den im Wesentlichen trapezförmigen Tragprofilen 20 sind die Schlagleisten 17,18 lösbar befestigt. Im dargestellten Ausführungsbeispiel können die Schlagleisten 17,18 mittels Schraubverbindungen lösbar an den Tragprofilen 20 befestigt sein. Die Schlagleisten 17, 18 können bevorzugt als Winkelprofile ausgebildet sein, deren Schenkel unter einem Winkel zwischen 136° und 156° zueinander angeordnet sind. Besonders bevorzugt beträgt der Schlagleistenwinkel der als Winkelprofil ausgebildeten Schlagleisten 17, 18 zwischen 140° Und 150°, um das Entstehen von Bruchkorn beim Auftreffen zu reduzieren.

Die beiden Schlagleisten 17, 18 sind im dargestellten Ausführungsbeispiel paarweise auf dem jeweiligen Tragprofil 20 angeordnet. Die Schlagleisten 17 weisen mehrere parallel nebeneinander angeordnete Rippen 21 auf, die sich radial nach außen erstrecken. Die Rippen 21 weisen bezogen auf die Rotationsrichtung R der Dreschtrommel 6 einen von der Mitte zur linken Außenkante 23 der Dreschtrommel 6 geneigten Verlauf auf. Die Schlagleisten 17 mit den Rippen 21, die in Richtung der linken Außenkante 23 geneigt sind, werden nachfolgend als linksgerippt bezeichnet. Die Schlagleisten 18 weisen parallel nebeneinander angeordnete Rippen 22 auf, die sich radial nach außen erstrecken. Die Rippen 22 weisen bezogen auf die Rotationsrichtung R der Dreschtrommel 6 einen von der Mitte zur rechten Außenkante 24 der Dreschtrommel 6 geneigten Verlauf auf. Die Schlagleisten 18 mit den Rippen 22, die in Richtung der rechten Außenkante 24 geneigt sind, werden nachfolgend als rechtsgerippt bezeichnet. Die Rippen 21, 22 der jeweils auf einem Tragprofil 20 nebeneinanderliegenden Schlagleisten 17, 18 sind gegensinnig orientiert. Jedes Tragprofil 20 ist in Rotationsrichtung R gesehen mit der gleichen Kombination bzw. Anordnung von Schlagleisten 17, 18 bestückt ist. Die Anordnung jeweils einer linksgerippten Schlagleiste 17 und rechtsgerippten Schlagleiste 18 nebeneinander auf einem Tragprofil 20 bewirkt eine Aufteilung und Ablenkung (Pfeile 25, 26) des Gutstroms GS entsprechend der Orientierung der Rippen 21, 22 in Richtung der Außenkanten 23, 24 der Dreschtrommel 6. Diese Ausführungsform ist vorteilhaft, wenn die der Dreschvorrichtung 2 nachgeordnete Abscheidevorrichtung 3 eine - wie in Fig. 1 dargestellt - nach dem Axialflussprinzip arbeitende Abscheidevorrichtung 3 mit zwei Trennrotoren oder ein Hordenschüttler ist. Die Zuführung des Erntegutes zum Hordenschüttler soll möglichst gleichmäßig über dessen gesamte Breite verteilt erfolgen, um den Abscheidevorgang optimiert ausführen zu können.

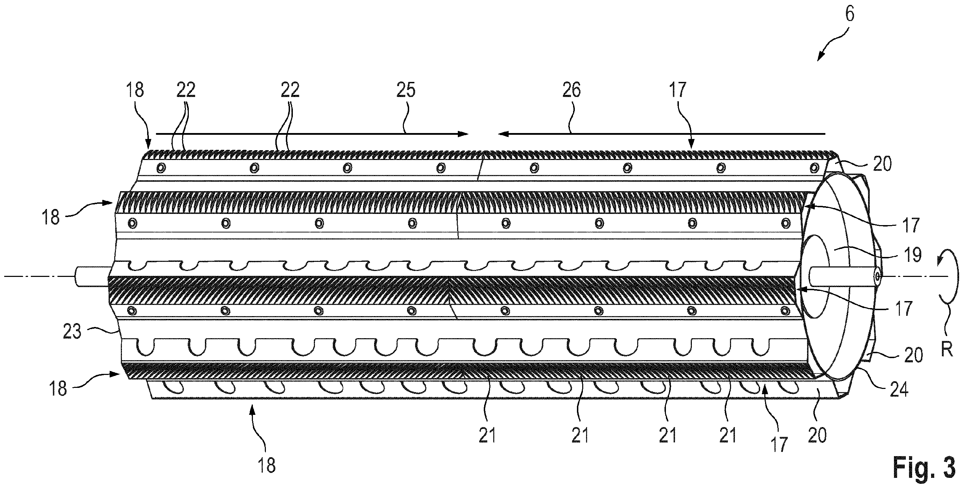

In Fig. 3 ist eine perspektivische Ansicht der Dreschtrommel 6 mit einer Anordnung der Schlagleisten 17, 18 gemäß einer zweiten Ausführungsform dargestellt. Die zwei Schlagleisten 17, 18 auf dem jeweiligen Tragprofil sind gegenüber dem in Fig. 2 dargestellten Ausführungsbeispiel spiegelbildlich angeordnet. Die Rippen 22 der rechtsgerippten Schlagleiste 18 sind nun von der Außenkante 23 in Richtung der Mitte der Dreschtrommel 6 geneigt. Die Rippen 21 der linksgerippten Schlagleiste 17 sind nun von der Außenkante 24 in Richtung der Mitte der Dreschtrommel 6 geneigt. Hierdurch ändert sich die Richtung der Aufteilung und Ablenkung (Pfeile 25, 26) des Gutstroms GS entsprechend. Die einander zugewandte Orientierung der Rippen 17, 18 führt dazu, dass der Gutstrom GS in einem, insbesondere mittigen, Bereich der Dreschtrommel 6 zentriert wird. Diese ist vorteilhaft, wenn die der Dreschvorrichtung 2 nachgeordnete Abscheidevorrichtung 3 eine nach dem Axialflussprinzip arbeitende Abscheidevorrichtung 3 mit nur einem Trennrotor ist. Der von der Dreschvorrichtung 2 kommende Gutstrom GS wird dabei dem Einlaufbereich des nur einen Trennrotors von der Umlenktrommel 7 zugeführt. Durch die Anordnung der Schlagleisten 17, 18 gemäß der zweiten Ausführungsform wird die Zuführung des Gutstroms durch die als Zuführtrommel ausgeführte Trommel 7 unterstützt bzw. begünstigt, da bereits vor der Übergabe des Gutstroms GS durch die Dreschvorrichtung 2 an die Abscheidevorrichtung 3 eine Zusammenführung des Gutstroms in einem Bereich erfolgt, der im Wesentlichen auf den Einlaufbereich des nur einen Trennrotors der Abscheidevorrichtung 3 gerichtet ist. Das frühzeitige Ablenken des Gutstroms GS durch die Schlagleisten 17, 18 aufgrund der gegensinnigen Anordnung der Rippen 21, 22 bewirkt zudem, dass der Anteil an Erntegut, welches bei der Zuführung durch die Trommel 7 von der Abscheidevorrichtung 3 nicht unmittelbar angenommen wird und dadurch in der Dreschvorrichtung 2 erneut umläuft, reduziert wird. Jedes Tragprofil 20 ist in Rotationsrichtung R gesehen mit der gleichen Kombination bzw. Anordnung von Schlagleisten 17, 18 bestückt ist.

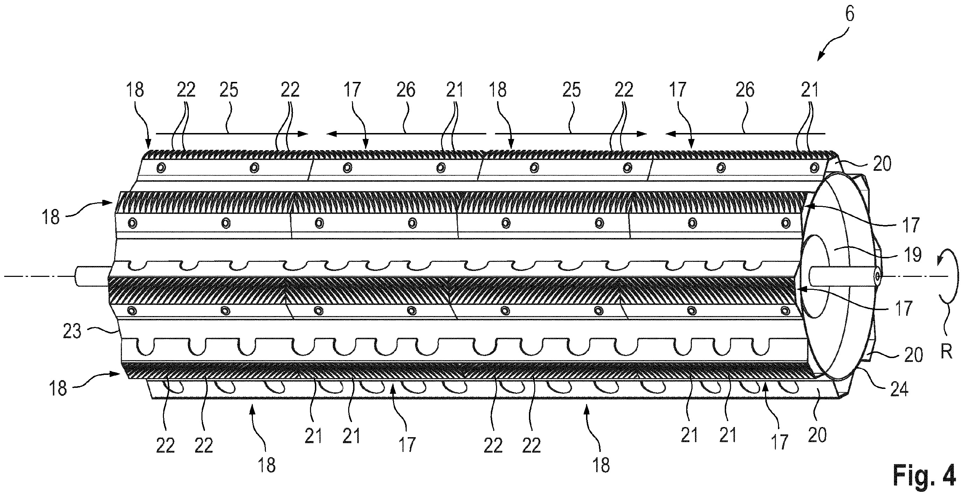

In Fig. 4 ist eine perspektivische Ansicht der Dreschtrommel 6, deren Tragprofile 20 jeweils mit vier Schlagleisten 17, 18 gemäß einer Anordnung einer dritten Ausführungsform bestückt sind, dargestellt. Auf dem jeweiligen Tragprofil 20 sind wechselweise eine linksgerippte Schlagleiste 17 und eine rechtsgerippte Schlagleiste 18 nebeneinander angeordnet. Die Schlagleisten 17, 18 erstrecken sich in axialer Richtung jeweils über einen Teilbereich des Tragprofils 20. An der linken Außenkante 23 ist eine rechtsgerippte Schlagleiste 18 angeordnet, auf die in axialer Richtung der Dreschtrommel 6 gesehen eine linksgerippte Schlagleiste 17 folgt. An der rechten Außenkante 24 ist eine linksgerippte Schlagleiste 17 angeordnet, auf die in axialer Richtung der Dreschtrommel 6 gesehen eine rechtsgerippte Schlagleiste 18 folgt. Durch diese Anordnung der Schlagleisten 17, 18 bilden sich zwei beabstandete Bereiche aus, auf die eine Aufteilung und Ablenkung (Pfeile 25, 26) des Gutstroms GS entsprechend der Orientierung der Rippen 21, 22 der jeweils nebeneinander angeordneten Schlagleisten 17, 18 erfolgt. Durch die wechselweise Anordnung der vier Schlagleisten 17, 18 auf dem jeweiligen Tragprofil 20 gemäß der dritten Ausführungsform wird die Zuführung des Gutstroms GS durch die Trommel 7 unterstützt bzw. begünstigt, da bereits vor der Übergabe des Gutstroms GS durch die Dreschvorrichtung 2 an die Abscheidevorrichtung 3 eine Zusammenführung des Gutstroms in den Bereichen erfolgt, in denen sich der jeweilige Einlaufbereich 13 des jeweiligen Trennrotors 11 der Abscheidevorrichtung 3 befindet. Darüber hinaus wird das Auftreten von Gutflussproblemen beim Aufteilen des Gutstroms GS auf die beiden Einlaufbereiche 13 im Bereich der Trommel 7 zumindest reduziert. Jedes Tragprofil 20 ist in Rotationsrichtung R gesehen mit der gleichen Kombination bzw. Anordnung von Schlagleisten 17, 18 bestückt ist.

### Bezugszeichenliste

- 1: Mähdrescher
- 2: Dreschvorrichtung
- 3: Abscheidevorrichtung
- 4: Schrägförderer
- 5: Beschleunigertrommel
- 6: Dreschtrommel
- 7: Trommel
- 8: Dreschkorb
- 9: Dreschkorb
- 10: Rotorgehäuse
- 11: Trennrotor
- 12: Gehäuseabschnitt
- 13: Einlaufbereich
- 14: Förderboden
- 15: Rücklaufboden
- 16: Reinigungsvorrichtung
- 17: Schlagleiste
- 18: Schlagleiste
- 19: Grundkörper
- 20: Tragprofil
- 21: Rippe
- 22: Rippe
- 23: Linke Außenkante
- 24: Rechte Außenkante
- 25: Pfeil
- 26: Pfeil
- GS: Gutstrom
- R: Rotationsrichtung
- FR: Fahrtrichtung

## Patentansprüche

1. Mähdrescher (1) mit einer nach dem Tangentialflussprinzip arbeitenden Dreschvorrichtung (2) sowie einer Abscheidevorrichtung (3), wobei die Dreschvorrichtung (2) eine Dreschtrommel (6) umfasst, umfassend einen in Umfangsrichtung geschlossen ausgeführten zylindrischen Grundkörper (19), auf welchem in Umfangsrichtung verteilt mehrere mit Abstand zueinander angeordnete Tragprofile (20) angebracht sind, die sich im Wesentlichen über die Breite des Grundkörpers (19) erstrecken, wobei an den Tragprofilen (20) jeweils mit Rippen (21, 22) versehene Schlagleisten (17, 18) lösbar befestigt sind, wobei die Rippen (21, 22) der jeweiligen Schlagleiste (17, 18) eine Neigung zur Rotationsrichtung (R) der Dreschtrommel (6) aufweisen, **dadurch gekennzeichnet, dass** zumindest zwei mit Rippen (21, 22) ausgeführte Schlagleisten (17, 18) nebeneinander auf dem jeweiligen Tragprofil (20) angeordnet sind, wobei die Rippen (21, 22) von jeweils nebeneinanderliegenden Schlagleisten (17, 18) gegensinnig orientiert sind, und dass jedes Tragprofil (20) mit einer gleichen Kombination und Anordnung von Schlagleisten (17, 18) bestückt ist.

2. Mähdrescher (1) nach Anspruch 1, **dadurch gekennzeichnet, dass** mehr als zwei Schlagleisten (17, 18) auf dem jeweiligen Tragprofil (20) nebeneinander angeordnet sind, wobei die Schlagleisten (17, 18) wechselweise über die Breite des jeweiligen Tragprofils (20) verteilt angeordnet sind, wobei die an den gegenüberliegenden Außenseiten des Tragprofils (20) angeordneten Schlagleisten (17, 18) jeweils Rippen (21, 22) aufweisen, die bezogen auf eine Rotationsrichtung (R) der Dreschtrommel (6) eine Neigung in Richtung auf einen mittleren Bereich der Dreschtrommel (6) aufweisen.

3. Mähdrescher (1) nach Anspruch 1, **dadurch gekennzeichnet, dass** die nebeneinander auf einem Tragprofil (20) angeordneten Schlagleisten (17, 18) im Wesentlichen die gleiche Breite aufweisen, wobei die Rippen (21, 22) der jeweiligen Schlagleiste (17, 18) bezogen auf eine Rotationsrichtung (R) der Dreschtrommel (6) jeweils eine Neigung in Richtung auf einen mittleren Bereich der Dreschtrommel (6) aufweisen.

4. Mähdrescher (1) nach Anspruch 1, **dadurch gekennzeichnet, dass** die nebeneinander auf einem Tragprofil (20) angeordneten Schlagleisten (17, 18) im Wesentlichen die gleiche Breite aufweisen, wobei die Rippen (21, 22) der jeweiligen Schlagleiste (17, 18) bezogen auf eine Rotationsrichtung (R) der Dreschtrommel (6) jeweils eine Neigung in Richtung einer Außenkante (23, 24) der Dreschtrommel (6) aufweisen.

5. Mähdrescher (1) nach einem der vorangehenden Ansprüche, **dadurch gekennzeichnet, dass** die Schlagleisten (17, 18) als Winkelprofile ausgebildet sind, deren Schenkel unter einem Winkel zwischen 136° und 156° zueinander angeordnet sind.

6. Mähdrescher (1) nach Anspruch 1-5, **dadurch gekennzeichnet, dass** die Abscheidevorrichtung (3) als ein Hordenschüttler ausgebildet ist.

7. Mähdrescher (1) nach Anspruch 1-5, **dadurch gekennzeichnet, dass** die Abscheidevorrichtung (3) nach dem Axialflussprinzip arbeitet.

8. Mähdrescher (1) nach Anspruch 7, **dadurch gekennzeichnet, dass** die Abscheidevorrichtung (3) zumindest einen Trennrotor (11) umfasst.

9. Mähdrescher (1) nach Anspruch 7, **dadurch gekennzeichnet, dass** die Abscheidevorrichtung (3) zwei Trennrotoren (11) umfasst.

## Claims

1. A combine harvester (1) with a threshing device (2) which operates in accordance with the tangential flow principle, as well as a separating device (3), wherein the threshing device (2) comprises a threshing drum (6) comprising a cylindrical main body (19) which is closed in the circumferential direction and on which a plurality of support profiles (20) which are distributed at a distance from one another in the circumferential direction are attached, which extend over substantially the width of the main body (19), wherein beater bars (17, 18) respectively provided with ribs (21, 22) are releasably mounted on the support profiles (20), wherein the ribs (21, 22) of the respective beater bars (17, 18) have an inclination to the direction of rotation (R) of the threshing drum (8), **characterized in that** at least two beater bars (17, 18) configured with ribs (21, 22) are disposed adjacent to each other on the respective support profile (20), wherein the ribs (21, 22) of respective beater bars (17, 18) lying adjacent to each other are orientated in opposite senses, and **in that** each support profile (20) is equipped with an identical combination and arrangement of beater bars (17, 18).

2. The combine harvester (1) according to claim 1, **characterized in that** more than two beater bars (17, 18) are disposed adjacent to each other on the respective support profile (20), wherein the beater bars (17, 18) are distributed in alternation over the width of the respective support profile (20), wherein the beater bars (17, 18) disposed on the opposing external sides of the support profile (20) respectively have ribs (21, 22) which have an inclination with respect to a direction of rotation (R) of the threshing drum (6) which is in the direction towards a central region of the threshing drum (6).

3. The combine harvester (1) according to claim 1, **characterized in that** the beater bars (17, 18) disposed adjacent to each other on a support profile (20) have substantially the same width, wherein the ribs (21, 22) of the respective beater bar (17, 18) respectively have an inclination with respect to a direction of rotation (R) of the threshing drum (6) which is in the direction towards a central region of the threshing drum (6).

4. The combine harvester (1) according to claim 1, **characterized in that** the beater bars (17, 18) disposed adjacent to each other on a support profile (20) have substantially the same width, wherein the ribs (21, 22) of the respective beater bar (17, 18) respectively have an inclination with respect to a direction of rotation (R) of the threshing drum (6) which is in the direction of an outer edge (23, 24) of the threshing drum (6).

5. The combine harvester (1) according to one of the preceding claims, **characterized in that** the beater bars (17, 18) are configured as angled profiles the sides of which are at an angle between 136° and 156° with respect to each other.

6. The combine harvester (1) according to claims 1 to 5, **characterized in that** the separating device (3) is configured as a straw walker.

7. The combine harvester (1) according to claims 1 to 5, **characterized in that** the separating device (3) operates in accordance with the axial flow principle.

8. The combine harvester (1) according to claim 7, **characterized in that** the separating device (3) comprises at least one separating rotor (11).

9. The combine harvester (1) according to claim 7, **characterized in that** the separating device (3) comprises two separating rotors (11).

## Revendications

1. Moissonneuse-batteuse (1) comprenant un dispositif de battage (2) fonctionnant selon le principe de flux tangentiel ainsi qu'un dispositif séparateur (3), le dispositif de battage (2) incluant un batteur (6) incluant un corps de base cylindrique (19) conçu de manière fermée dans la direction circonférentielle, sur lequel plusieurs profilés porteurs (20) disposés à distance les uns des autres sont disposés de manière répartie dans la direction circonférentielle, lesquels s'étendent sensiblement sur la largeur du corps de base (19), sur les profilés porteurs (20) étant respectivement fixées de façon amovible des battes (17, 18) munies de nervures (21, 22), les nervures (21, 22) de la batte respective (17, 18) présentant une inclinaison dans le sens de rotation (R) du batteur (6), **caractérisée en ce qu'**au moins deux battes (17, 18) conçues avec des nervures (21, 22) sont disposées l'une à côté de l'autre sur le profilé porteur respectif (20), les nervures (21, 22) de battes disposées respectivement l'une à côté de l'autre (17, 18) étant orientées en sens contraires, et **en ce que** chaque profilé porteur (20) est garni d'une combinaison et d'un agencement identiques de battes (17, 18).

2. Moissonneuse-batteuse (1) selon la revendication 1, **caractérisée en ce que** plus de deux battes (17, 18) sont disposées les unes à côté des autres sur le profilé porteur respectif (20), les battes (17, 18) étant disposées de manière répartie en alternance sur la largeur du profilé porteur respectif (20), les battes (17, 18) disposées sur les côtés extérieurs opposés du profilé porteur (20) comportant respectivement des nervures (21, 22) qui, par rapport à un sens de rotation (R) du batteur (6), présentent une inclinaison en direction d'une zone centrale du batteur (6).

3. Moissonneuse-batteuse (1) selon la revendication 1, **caractérisée en ce que** les battes (17, 18) disposées l'une à côté de l'autre sur le profilé porteur (20) présentent sensiblement la même largeur, les nervures (21, 22) de la batte respective (17, 18) présentant, par rapport à un sens de rotation (R) du batteur (6), respectivement une inclinaison en direction d'une zone centrale du batteur (6).

4. Moissonneuse-batteuse (1) selon la revendication 1, **caractérisée en ce que** les battes (17, 18) disposées l'une à côté de l'autre sur le profilé porteur (20) présentent sensiblement la même largeur, les nervures (21, 22) de la batte respective (17, 18) présentant, par rapport à un sens de rotation (R) du batteur (6), respectivement une inclinaison en direction d'un bord extérieur (23, 24) du batteur (6).

5. Moissonneuse-batteuse (1) selon une des revendications précédentes, **caractérisée en ce que** les battes (17, 18) sont conformées en profilés angulaires dont les ailes sont disposées selon un angle entre 136° et 156° l'une par rapport à l'autre.

6. Moissonneuse-batteuse (1) selon la revendication 1 à 5, **caractérisée en ce que** le dispositif séparateur (3) est conformé en secoueur à éléments multiples.

7. Moissonneuse-batteuse (1) selon la revendication 1 à 5, **caractérisée en ce que** le dispositif séparateur (3) fonctionne selon le principe de flux axial.

8. Moissonneuse-batteuse (1) selon la revendication 7, **caractérisée en ce que** le dispositif séparateur (3) inclut au moins un rotor de séparation (11).

9. Moissonneuse-batteuse (1) selon la revendication 7, **caractérisée en ce que** le dispositif séparateur (3) inclut deux rotors de séparation (11) .
